# EUROPÄISCHE PATENTANMELDUNG

(11) **EP 2 805 989 A1**
(43) Veröffentlichungstag der Anmeldung: **26.11.2014**
(21) Anmeldenummer: 14157133.1
(22) Anmeldetag: 28.02.2014
(51) Int. Cl.: C08J 5/00, C08J 5/18, C08L 25/10, F16L 9/00, F16L 11/00

(54) **Ein- oder mehrschichtiger Polymerartikel**

(30) Priorität: 23.05.2013 DE 102013105252
(71) Anmelder: ContiTech Schlauch GmbH, 30165 Hannover (DE)
(72) Erfinder: Onken, Kristian, 34117 Kassel (DE); Mroz, Michael, 37154 Northeim (DE); Epp, Bernhard, 34477 Twistetal (DE)
(74) Vertreter: Preusser, Andrea

(57) **Zusammenfassung**

Die Erfindung betrifft einen ein- oder mehrschichtigen Polymerartikel für den Einsatz im Trinkwasserbereich, wobei wenigstens eine Schicht aus einer Kombination wenigstens eines SEEPS und wenigstens eines Polyolefins aufgebaut ist.

Der Polymerartikel kann als Abdeckfolie, Plane, Auskleidung, Förderband, Schlauch oder Dichtung verwendet werden.

## Beschreibung

Die Erfindung betrifft einen ein- oder mehrschichtigen Polymerartikel für den Einsatz im Trinkwasserbereich.

Polymerartikel im Trinkwasserbereich bzw. Polymerartikel, die direkten Kontakt mit Trinkwasser haben, unterliegen in fast allen Ländern strengen gesetzlichen Vorgaben. So sollen in der Regel keine organischen Verbindungen aus der Polymermischung in das Medium übergehen und es darf keine geruch- oder geschmackliche Veränderung des Mediums erfolgen. Diese Anforderungen können bislang nicht durch reine (klassische) Polymermischungen wie z.B. NBR- und EPDM-Mischungen erfüllt werden, da einige der Inhaltsstoffe (z.B. Vernetzungsmittel, Hilfsstoffe oder Füllstoffe) eine geruchs- und/oder geschmacksbeeinflussende Wirkung haben oder wie bei den Weichmachern, eine mikrobenwachstumsfördernde Wirkung. Aufgrund dieser Tatsache werden derzeit im Trinkwasserbereich häufig Kunststoffe verwendet, die ausschließlich aus Polyolefinen wie z.B. PE, PP, X-PE oder PVC gefertigt sind. Nachteilig bei der Verwendung von Kunststoffen ist die Steifigkeit bzw. mangelnde Flexibilität des Materials, was sich bei der Verarbeitung und im Einsatz negativ auswirkt. Zudem können bei vernetzten Kunststoffen Spaltprodukte das Medium verunreinigen oder weichermacherhaltige Kunststoffe das Mikrobenwachstum fördern.

Im Rahmen einer Weiterentwicklung besteht die Aufgabe der Erfindung daher darin, einen Polymerartikel für den Einsatz im Trinkwasserbereich bereitzustellen, der möglichst weichmacherfrei, geruchs- und geschmacksneutral ist.

Gelöst wird diese Aufgabe dadurch, dass der ein- oder mehrschichtige Polymerartikel aus wenigstens einer Schicht aus einer Kombination wenigstens eines Styrol-Oligoblock-Copolymers (TPE-S bzw. TPES) und wenigstens eines Polyolefins aufgebaut ist, wobei das TPES ein hydriertes *Poly(styrol-b-isopren*/*butadien-b-styrol)* (SEEPS) ist.

Überraschenderweise hat sich gezeigt, dass ein ein- oder mehrschichtiger Artikel die oben genannten Anforderungen erfüllt, wenn wenigstens eine Schicht aus einer Kombination wenigstens eines SEEPS und wenigstens eines Polyolefins aufgebaut ist. Zusätzlich ist ein derartiger Polymerartikel effizient und kostengünstig herzustellen, da entweder ein dornloses Herstellverfahren oder ein Extrusionsverfahren angewandt werden kann.

Als SEEPS können alle der fachkundigen Personen bekannten SEEPS verwendet werden. Insbesondere die Verwendung von SEEPS mit der CAS-Nr. 132778-07-5, welches als hydriertes poly(styrol-b-isopren/butadien-b-styrol oder auch als Polystyrol-b-poly(ethylen-ethylen/propylen)-b-polystyrol bezeichnet wird und die folgende Struktur (I) 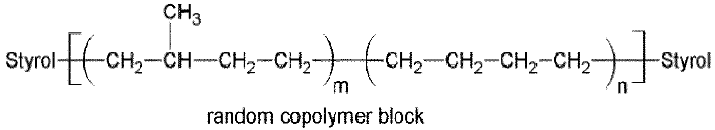 besitzt, und / oder die Verwendung von SEEPS mit der CAS-Nr. 366803-77-2, welches als hydriertes poly(styrol-b-isopren/butadien-b-styrol oder auch als Polystyrol-b-poly(ethylen-ethylen/propylen)-b-polystyrol bezeichnet wird und die folgende Struktur (II) 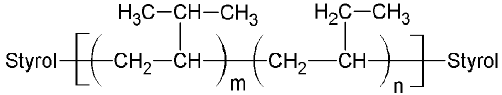 besitzt, hat sich als besonders vorteilhaft gezeigt, wobei hier zur weiteren Reduzierung der Weichmacher bzw. zur vollständigen Freiheit von Weichmachern SEEPS mit der CAS-Nr. 366803-77-2 ganz besonders bevorzugt ist.
Die Menge an Weichmachern beträgt bevorzugt 0 bis 3 Gew. -%.
Vollständige Freiheit von Weichmachern bedeutet, dass der Anteil an Weichmachern 0 Gew.-% beträgt.

Es ist möglich, dass eine Mischung von SEEPS und wenigstens einem weiteren TPES verwendet wird. Hierbei muss allerdings das SEEPS immer einen Anteil von mehr als 50 Gew.-%, bevorzugt von mehr als 80 Gew. -%, ganz besonders bevorzugt von mehr als 90 Gew. -%, in der Gesamtmischung aus SEEPS und den weiteren TPES haben. Als weitere TPES kommen bspw. Polystyrol-b-poly(ethylen/propylen) (SEP, hydriertes poly(styrol-b-isopren), CAS-Nr. 68648-89-5) und / oder Polystyrol-b-(polyethylen/propylen)-b-polystyrol (SEPS, hydriertes poly(styrol-b-isopren-b-styrol), CAS-Nr. 68648-89-5) und / oder Polystyrol-b-Poly(ethylen/propylen)-b-polystyrol (SEBS, hydriertes poly(styrol-b-butadien-b-styrol), CAS-Nr. 66070-58-4) und / oder Poly(styrol-b-isopren-b-styrol (SIS, Poly(styrol-b-isopren-b-styrol), CAS-Nr. 25038-32-8 und / oder Polystyrol-b-poly(ethylene/propylene)-b-polystyrol (SEPS, hydriertes poly(styrol-b-isopren-b-styrol), CAS-Nr. 68648-89-5) in Frage.

Als Polyolefin (PO) können alle der fachkundigen Person bekannten Polyolefine, wie bspw. Polypropylen, Polyethylen, etc.) verwendet werden. Die verwendeten Polyolefine sollten für die Anwendung im Trinkwasserbereich trinkwasserzugelassen sein. Geeignet hierfür sind bspw. Polyethylen (PE), hierbei insbesondere die Typen PE-MD und / oder PE-HD. Ein geeignetes PE-HD ist zum Beispiel Hostalen^{®} CRP 100 blue der Fa. Basell. Das Polyolefin kann transparent oder für optische Zwecke gefärbt sein.

Das Mischungsverhältnis von SEEPS zu Polyolefin (TPES / PO) beträgt bevorzugt 2 bis 54 M-% TPES zu 46 bis 98 M-% Polyolefin, besonders bevorzugt 30 bis 54 M-% TPES zu 46 bis 70 M-% Polyolefin, ganz besonders bevorzugt 40 bis 54 M-% TPE zu 46 bis 60 M-% Polyolefin.
Bei Verwendung einer Kombination aus SEEPS und wenigstens einem weiteren TPES sind die oben genannten Mischungsverhältnisse auf die Gesamtmenge SEEPS und TPES ((SEEPS+TPES) / PO) anzuwenden.
Das Gemisch liegt in einer besonders bevorzugten Ausführungsform als Granulat vor. Die Mischung SEEPS/Polyolefin kann an einem gängigen Kunststoffextruder verarbeitet werden, sie kann thermoplastisch in alle möglichen Formen (z.B. Zylinder/Folien/Bänder) gebracht werden, wobei sie ihre Flexibilität beibehält. Gegenüber Gummi kann das Material mehrfach (reversibel) verarbeitet werden.

Aufgrund der speziellen chemischen Struktur des SEEPS besitzt der Polymerartikel eine hohe Flexibilität und kann vollkommen frei von Weichmachern ausgebildet werden. Das zugesetzte Polyolefin besitzt eine Trinkwasserzulassung und verbessert die Extrusionseigenschaften, die physikalischen und sensorischen Eigenschaften und macht den Artikel zudem deutlich kostengünstiger.

Der ein- oder mehrschichtige Artikel enthält bevorzugt wenigstens zwei oder mehr Schichten. Dies bedeutet, es können gegebenenfalls in dem Artikel noch weitere Schichten, z. Bsp. Verstärkungsschichten, so genannte Festigkeitsträgerschichten, oder Polymerschichten vorhanden sein.
Die Anzahl der Schichten ist abhängig von Einsatzgebiet des Polymerartikels. Der Polymerartikel kann zum Beispiel eine Abdeckfolie, eine Plane, oder eine Auskleidung für den Direktkontakt mit Trinkwasser sein, die häufig lediglich einschichtig ausgebildet sind. Es kann sich aber auch um Förderbänder für den Transport von Lebensmitteln oder im Trinkwasserbereich handeln, die zumeist mehrschichtig sind. Ebenso kann der Artikel auch eine Dichtung oder ein Schlauch mit Trinkwasserzulassung sein.

## Patentansprüche

1. Ein- oder mehrschichtiger Polymerartikel für den Einsatz im Trinkwasserbereich, **dadurch gekennzeichnet, dass** wenigstens eine Schicht aus einer Kombination wenigstens eines Styrol-Oligoblock-Copolymers (TPE-S bzw. TPES) und wenigstens eines Polyolefins aufgebaut ist, wobei das TPES ein hydriertes Poly(styrol-b-isopren/butadien-b-styrol) (SEEPS) ist.

2. Ein- oder mehrschichtiger Polymerartikel nach Anspruch 1, **dadurch gekennzeichnet, dass** das SEEPS Polystyrol-b-poly(ethylen-ethylen/propylen)-b-polystyrol (hydriertes poly(styrol-b-isopren/butadien-b-styrol), CAS-Nr. 132778-07-5) und / oder Polystyrol-b-poly(ethylen-ethylen/propylen)-b-polystyrol (hydriertes poly(styrol-b-isopren/butadien-b-styrol), CAS-Nr. 366803-77-2) ist.

3. Ein- oder mehrschichtiger Polymerartikel nach Anspruch 2, **dadurch gekennzeichnet, dass** das SEEPS Polystyrol-b-poly(ethylen-ethylen/propylen)-b-polystyrol (hydriertes poly(styrol-b-isopren/butadien-b-styrol) mit der CAS-Nr. 366803-77-2 ist.

4. Ein- oder mehrschichtiger Polymerartikel nach einem der Ansprüche 1 bis 3, **dadurch gekennzeichnet, dass** das Polyolefin ein Polyethylen (PE) ist.

5. Ein- oder mehrschichtiger Polymerartikel nach Anspruch 4, **dadurch gekennzeichnet, dass** das PE ein PE-HD ist.

6. Ein- oder mehrschichtiger Polymerartikel nach einem der Ansprüche 1 bis 5, **dadurch gekennzeichnet, dass** das Verhältnis von SEEPS zu Polyolefin 2 bis 54 M-% SEEPS zu 46 bis 98 M-% Polyolefin beträgt.

7. Ein- oder mehrschichtiger Polymerartikel nach einem der Ansprüche 1 bis 6, **dadurch gekennzeichnet, dass** er frei von Weichmachern ist.

8. Verwendung eines ein- oder mehrschichtiger Polymerartikels nach einem der Ansprüche 1 bis 7 als Abdeckfolie, Plane, Auskleidung, Förderband, Schlauch oder Dichtung.
